# EUROPÄISCHE PATENTANMELDUNG

(11) **EP 1 501 180 A1**
(43) Veröffentlichungstag der Anmeldung: **26.01.2005**
(21) Anmeldenummer: 03405558.2
(22) Anmeldetag: 23.07.2003
(51) Int. Cl.: H02M 7/48

(54) **Umrichterschaltung**

(71) Anmelder: ABB Schweiz AG, 5400 Baden (CH)
(72) Erfinder: Steimer, Peter, 5424 Unterehrendingen (CH)
(74) Vertreter: ABB Patent Attorneys

(57) **Zusammenfassung**

Es wird eine Umrichterschaltung für mindestens eine Phase (R, S, T) angegeben, die ein für jede Phase (R, S, T) vorgesehenes erstes Schaltgruppensystem (1) umfasst, welches eine durch einen Leistungshalbleiterschalter (2) und durch einen mit dem Leistungshalbleiterschalter (2) verbundenen Kondensator (3) gebildete erste Hauptschaltgruppe (4) aufweist, und welches mindestens eine durch zwei in Serie geschaltete ansteuerbare Leistungshalbleiterschalter (5) und durch einen Kondensator (6) gebildete Zwischenschaltgruppe (7) aufweist, wobei die oder eine Zwischenschaltgruppe (7) mit der ersten Hauptschaltgruppe (4) verbunden ist. Weiterhin weist das erste Schaltgruppensystem eine durch einen Leistungshalbleiterschalter (8) gebildete zweite Hauptschaltgruppe (9) auf, wobei die oder eine Zwischenschaltgruppe (7) mit der zweiten Hauptschaltgruppe (9) verbunden ist. Zur Vereinfachung und zur Verringerung der Störanfälligkeit der Umrichterschaltung ist der Leistungshalbleiterschalter (2) der ersten Hauptschaltgruppe (4) und der Leistungshalbleiterschalter (8) der zweiten Hauptschaltgruppe (9) jeweils nur durch ein passives nicht ansteuerbares elektronisches Bauelement (1) mit unidirektionaler Stromführungsrichtung gebildet.

## Beschreibung

### Technisches Gebiet

Die Erfindung bezieht sich auf das Gebiet der Leistungselektronik. Sie geht aus von einer Umrichterschaltung gemäss dem Oberbegriff des unabhängigen Anspruchs.

### Stand der Technik

Umrichterschaltungen werden heute in einer Fülle von leistungselektronischen Anwendungen eingesetzt. Die Anforderungen an eine solche Umrichterschaltung sind dabei zum einen, möglichst wenig Oberschwingungen an Phasen eines an die Umrichterschaltung gängigerweise angeschlossenen elektrischen Wechselspannungsnetzes zu erzeugen und zum anderen mit einer möglichst geringen Anzahl an elektronischen Bauelementen möglichst grosse Leistungen zu übertragen. Eine geeignete Umrichterschaltung ist in der WO 01/93412 A2 angegeben. Darin ist ein erstes Schaltgruppensystem für jede Phase vorgesehen, welches eine durch einen Leistungshalbleiterschalter und durch einen mit dem Leistungshalbleiterschalter verbundenen Kondensator gebildete erste Hauptschaltgruppe aufweist. Der Leistungshalbleiterschalter der ersten Hauptschaltgruppe ist durch einen Bipolartransistor mit isoliert angeordneter Ansteuerelektrode (IGBT - Insulated Gate Bipolartransistor) und durch eine dem Bipolartransistor antiparallel geschaltete Diode gebildet. Der Leistungshalbleiterschalter der ersten Hauptschaltgruppe ist somit durch ein aktives ansteuerbares elektronisches Bauelement, nämlich dem Bipolartransistor, und zusätzlich durch die Diode gebildet, so dass mit dem derart gebildeten Leistungshalbleiterschalter eine bidirektionale Stromführungsrichtung ermöglicht ist. Weiterhin weist das erste Schaltgruppensystem mindestens eine durch zwei in Serie geschaltete ansteuerbare Leistungshalbleiterschalter und durch einen Kondensator gebildete Zwischenschaltgruppe auf, wobei die oder eine Zwischenschaltgruppe mit der ersten Hauptschaltgruppe verbunden ist. Jeder der ansteuerbaren Leistungshalbleiterschalter der Zwischenschaltgruppe ist ebenfalls durch einen Bipolartransistor mit isoliert angeordneter Ansteuerelektrode und durch eine dem Bipolartransistor antiparallel geschaltete Diode gebildet. Ferner umfasst das erste Schaltgruppensystem eine durch einen Leistungshalbleiterschalter gebildete zweite Hauptschaltgruppe, wobei die oder eine Zwischenschaltgruppe mit der zweiten Hauptschaltgruppe verbunden ist. Der Leistungshalbleiterschalter der zweiten Hauptschaltgruppe ist auch durch einen Bipolartransistor mit isoliert angeordneter Ansteuerelektrode und durch eine dem Bipolartransistor antiparallel geschaltete Diode gebildet. Der Leistungshalbleiterschalter der zweiten Hauptschaltgruppe ist somit auch durch ein aktives ansteuerbares elektronisches Bauelement, nämlich dem Bipolartransistor mit isoliert angeordneter Ansteuerelektrode, und zusätzlich durch die Diode gebildet, wobei mit dem derart gebildeten Leistungshalbleiterschalter ebenfalls die bereits erwähnte bidirektionale Stromführungsrichtung ermöglicht ist.

Problematisch bei einer Umrichterschaltung nach der WO 01/93412 A2 ist, dass der Leistungshalbleiterschalter der ersten Hauptschaltgruppe und der zweiten Hauptschaltgruppe eine Vielzahl an elektronischen Bauelementen aufweisen, d.h. dass der Leistungshalbleiterschalter durch den Bipolartransistor mit isoliert angeordneter Ansteuerelektrode und zusätzlich durch die Diode gebildet ist. Die grosse Anzahl an elektronischen Bauelementen macht die Umrichterschaltung bezüglich ihres Aufbaus kompliziert, verursacht hohe Kosten der Umrichterschaltung und erfordert einen enormen Platzbedarf aufgrund der elektronischen Bauelemente selbst und aufgrund deren Verkabelung. Durch den Einsatz des Bipolartransistors mit isoliert angeordneter Ansteuerelektrode im Leistungshalbleiterschalter der ersten und zweiten Hauptschaltgruppe ist es desweiteren notwendig, entsprechende Ansteuerschaltungen vorzusehen, wodurch ein hoher Ansteueraufwand notwendig ist, sich der Verkabelungsaufwand weiter erhöht und zusätzlicher Platzbedarf notwendig ist, so dass die Kosten für eine Umrichterschaltung nach der WO 01/93412 A2 weiter ansteigen. Durch den komplizierten Aufbau der Umrichterschaltung mit den vielen elektronischen Bauelementen, den hohen Ansteueraufwand und den grossen Verkabelungsaufwand ist die Umrichterschaltung nach der WO 01/93412 A2 störanfällig, so dass die Verfügbarkeit der Umrichterschaltung insgesamt klein ist. Zudem ist der Bipolartransistor mit isoliert angeordneter Ansteuerelektrode ein teueres und, durch seine Bauart bedingt, ein störanfälliges elektronisches Bauelement, so dass die Verfügbarkeit der Umrichterschaltung weiter absinkt.

Darüber hinaus arbeitet die Umrichterschaltung nach der WO 01/93412 A2 in vielen Betriebsanwendungen der Umrichterschaltung, wie beispielsweise bei Zwei-Quadranten-Betriebsanwendungen, unwirtschaftlich, da dann der Bipolartransistor mit isoliert angeordneter Ansteuerelektrode des Leistungshalbleiterschalters der ersten und zweiten Hauptschaltgruppe zwar angesteuert wird, aber strommässig überhaupt nicht oder nur sehr schwach belastet wird.

### Darstellung der Erfindung

Aufgabe der Erfindung ist es deshalb, eine Umrichterschaltung für mindestens eine Phase anzugeben, die mit möglichst wenigen elektronischen Bauelementen auskommt, platzsparend realisiert werden kann, einen geringen Ansteueraufwand aufweist und zusätzlich unkompliziert und wenig störungsanfällig ist. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung für mindestens eine Phase umfasst für jede Phase ein erstes Schaltgruppensystem, welches eine durch einen Leistungshalbleiterschalter und durch einen mit dem Leistungshalbleiterschalter verbundenen Kondensator gebildete erste Hauptschaltgruppe aufweist. Zudem weist das erste Schaltgruppensystem mindestens eine durch zwei in Serie geschaltete ansteuerbare Leistungshalbleiterschalter und durch einen Kondensator gebildete Zwischenschaltgruppe auf, wobei die oder eine Zwischenschaltgruppe mit der ersten Hauptschaltgruppe verbunden ist. Ferner weist das erste Schaltgruppensystem eine durch einen Leistungshalbleiterschalter gebildete zweite Hauptschaltgruppe auf, wobei die öder eine Zwischenschaltgruppe mit der zweiten Hauptschaltgruppe verbunden ist. Erfindungsgemäss ist der Leistungshalbleiterschalter der ersten Hauptschaltgruppe durch ein passives nicht ansteuerbares elektronisches Bauelement mit unidirektionaler Stromführungsrichtung gebildet. Darüber hinaus ist der Leistungshalbleiterschalter der zweiten Hauptschaltgruppe erfindungsgemäss ebenfalls durch ein passives nicht ansteuerbares elektronisches Bauelement mit unidirektionaler Stromführungsrichtung gebildet.

Dadurch, dass der Leistungshalbleiterschalter der ersten Hauptschaltgruppe und der Leistungshalbleiterschalter der zweiten Hauptschaltgruppe jeweils nur durch ein passives nicht ansteuerbares elektronisches Bauelement mit unidirektionaler Stromführungsrichtung gebildet ist und somit jeweils ohne ein aus dem Stand der Technik bekanntes aktives ansteuerbares elektronisches Bauelement, beispielsweise einen Bipolartransistor mit isoliert angeordneter Ansteuerelektrode, auskommt, ist eine mit sehr wenigen elektronischen Bauelementen auskommende und damit sehr einfache und unkomplizierte Umrichterschaltung erreicht. Desweiteren ist die erfindungsgemässe Umrichterschaltung durch die geringe Anzahl an elektronischen Bauelementen zudem kostengünstig zu realisieren und zu betreiben, weist einen sehr geringen Ansteuer- und Verkabelungsaufwand auf, benötigt dadurch nur wenig Platz und zeichnet sich durch eine geringe Störanfälligkeit und damit durch eine hohe Verfügbarkeit aus.

Darüber hinaus kann die erfindungsgemässe Umrichterschaltung sehr wirtschaftlich betrieben werden, da der als passives nicht ansteuerbares elektronisches Bauelement mit unidirektionaler Stromführungsrichtung ausgebildete Leistungshalbleiterschalter der ersten und zweiten Hauptschaltgruppe beim Betrieb der Umrichterschaltung an der Stromführung beteiligt ist und somit in einem hohen Masse ausgelastet ist.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Umrichterschaltung,
- Fig. 2: eine zweite Ausführungsform der erfindungsgemässen Umrichterschaltung,
- Fig. 3: eine dritte Ausführungsform der erfindungsgemässen Umrichterschaltung,
- Fig. 4: eine vierte Ausführungsform der erfindungsgemässen Umrichterschaltung,
- Fig. 5: eine fünfte Ausführungsform der erfindungsgemässen Umrichterschaltung,
- Fig. 6: eine sechste Ausführungsform der erfindungsgemässen Umrichterschaltung,
- Fig. 7: eine siebte Ausführungsform der erfindungsgemässen Umrichterschaltung,
- Fig. 8: eine achte Ausführungsform der erfindungsgemässen Umrichterschaltung und
- Fig. 9: eine neunte Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

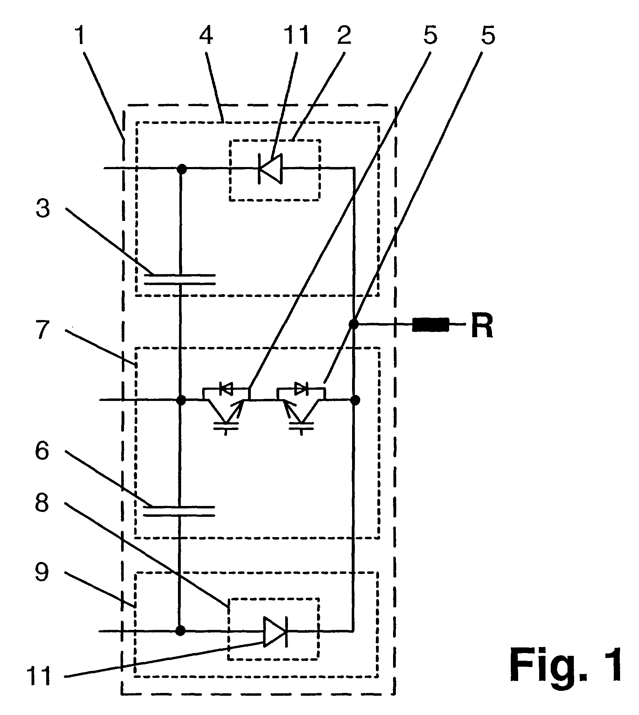

In Fig. 1 ist eine, insbesondere einphasige, erste Ausführungsform einer erfindungsgemässen Umrichterschaltung gezeigt. Darin umfasst die Umrichterschaltung für mindestens eine Phase R, S, T ein für jede Phase R, S, T vorgesehenes erstes Schaltgruppensystem 1, welches eine durch einen Leistungshalbleiterschalter 2 und durch einen mit dem Leistungshalbleiterschalter 2 verbundenen Kondensator 3 gebildete erste Hauptschaltgruppe 4 aufweist. Ferner weist das erste Schaltgruppensystem 1 mindestens eine durch zwei in Serie geschaltete ansteuerbare Leistungshalbleiterschalter 5 und durch einen Kondensator 6 gebildete Zwischenschaltgruppe 7 auf, wobei die oder eine Zwischenschaltgruppe 7 mit der ersten Hauptschaltgruppe 4 verbunden ist. Die zwei in Serie geschalteten ansteuerbaren Leistungshalbleiterschalter 5 der Zwischenschaltgruppe 7 sind gemäss Fig. 1 jeweils als Bipolartransistoren mit isoliert angeordneten Ansteuerelektroden und antiparallel geschalteten Dioden ausgeführt. Zudem weist das erste Schaltgruppensystem 1 eine durch einen Leistungshalbleiterschalter 8 gebildete zweite Hauptschaltgruppe 9 auf, wobei die oder eine Zwischenschaltgruppe 7 mit der zweiten Hauptschaltgruppe 9 verbunden ist. Nach der Erfindung ist der Leistungshalbleiterschalter 2 der ersten Hauptschaltgruppe 4 durch ein passives nicht ansteuerbares elektronisches Bauelement 11 mit unidirektionaler Stromführungsrichtung und der Leistungshalbleiterschalter 8 der zweiten Hauptschaltgruppe 9 ebenfalls durch ein passives nicht ansteuerbares elektronisches Bauelement 11 mit unidirektionaler Stromführungsrichtung gebildet.

Die erfindungsgemässe Umrichterschaltung kommt somit ohne ein aus dem Stand der Technik bekanntes aktives ansteuerbares elektronisches Bauelement, beispielsweise einen Bipolartransistor mit isoliert angeordneter Ansteuerelektrode, für die erste und zweite Hauptschaltgruppe 4, 9 aus, da der Leistungshalbleiterschalter 2 der ersten Hauptschaltgruppe 4 und der Leistungshalbleiterschalter 8 der zweiten Hauptschaltgruppe 8 jeweils nur durch ein passives nicht ansteuerbares elektronisches Bauelement 11 mit unidirektionaler Stromführungsrichtung gebildet ist. Durch diese Massnahme ist eine mit sehr wenigen elektronischen Bauelementen auskommende und damit sehr einfache und unkomplizierte Umrichterschaltung erreicht. Ferner ist die erfindungsgemässe Umrichterschaltung durch die geringe Anzahl an elektronischen Bauelementen zudem kostengünstig zu realisieren und zu betreiben, weist einen sehr geringen Ansteuer- und Verkabelungsaufwand auf, benötigt dadurch nur wenig Platz und zeichnet sich durch eine geringe Störanfälligkeit und damit durch eine hohe Verfügbarkeit aus.

Darüber hinaus kann die erfindungsgemässe Umrichterschaltung sehr wirtschaftlich betrieben werden, da der als passives nicht ansteuerbares elektronisches Bauelement 11 mit unidirektionaler Stromführungsrichtung ausgebildete Leistungshalbleiterschalter 2, 8 der ersten und zweiten Hauptschaltgruppe 4 ,9 beim Betrieb der Umrichterschaltung an der Stromführung beteiligt ist und somit in einem hohen Masse ausgelastet ist.

Die erfindungsgemässe Umrichterschaltung ist für einen Zweiquadrantenbetrieb als Gleichrichter und als Phasenschieber beispielsweise zur Kompensation von Blindleistung betreibbar beziehungsweise einsetzbar. Vorzugsweise wird die erfindungsgemäss Umrichterschaltung mit einem dreiphasigen, preiswerten Standardtransformator auf der Phasenseite an Stelle von 12-pulsigen, 18-pulsigen oder 24-pulsigen Gleichrichterschaltungen mit aufwändigen Spezialtransformatoren eingesetzt.

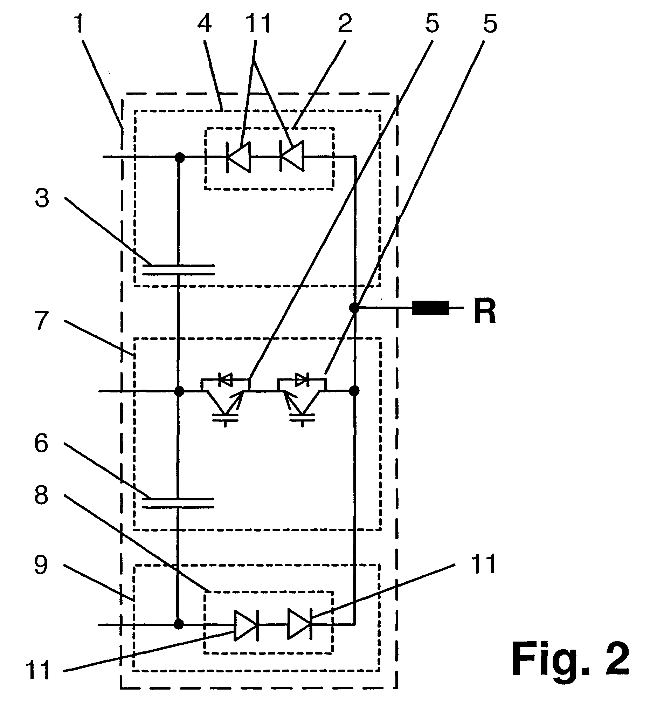

In Fig. 2 ist eine zweite Ausführungsform der erfindungsgemässen Umrichterschaltung gezeigt. Darin ist beim ersten Schaltgruppensystem 1 der Leistungshalbleiterschalter 2 der ersten Hauptschaltgruppe 4 durch ein weiteres passives nicht ansteuerbares elektronisches Bauelement 11 mit unidirektionaler Stromführungsrichtung gebildet ist, wobei das weitere elektronische Bauelement 11 in Serie zum bestehenden elektronischen Bauelement 11 geschaltet ist. Zudem ist gemäss Fig. 2 beim ersten Schaltgruppensystem 1 der Leistungshalbleiterschalter 8 der zweiten Hauptschaltgruppe 9 ebenfalls durch ein weiteres passives nicht ansteuerbares elektronisches Bauelement 11 mit unidirektionaler Stromführungsrichtung gebildet ist, wobei das weitere elektronische Bauelement 11 in Serie zum bestehenden elektronischen Bauelement 11 geschaltet ist. Vorzugsweise ist das bestehende und das weitere passive nicht ansteuerbare elektronische Bauelement 11 gemäss Fig. 1 beziehungsweise gemäss Fig. 2 eine Diode. In Fig. 1 ist die Diode als hochsperrende Diode, d.h. eine Diode mit einer hohen Sperrspannung, ausgebildet. Die Serienschaltung des bestehenden passiven nicht ansteuerbarenelektronischen Bauelementes 11 mit unidirektionaler Stromführungsrichtung mit dem weiteren passiven nicht ansteuerbarenelektronischen Bauelementes 11 mit unidirektionaler Stromführungsrichtung bezüglich der ersten und zweiten Hauptschaltgruppe 4, 9 gemäss Fig. 2 bewirkt weiterhin, dass sich die Spannung über beiden elektronischen Bauelementen 11 aufteilt und somit insgesamt eine höhere Sperrfähigkeit der erfindungsgemässen Umrichterschaltung erreicht werden kann und damit eine grössere Leistung durch die erfindungsgemässe Umrichterschaltung übertragen werden kann.

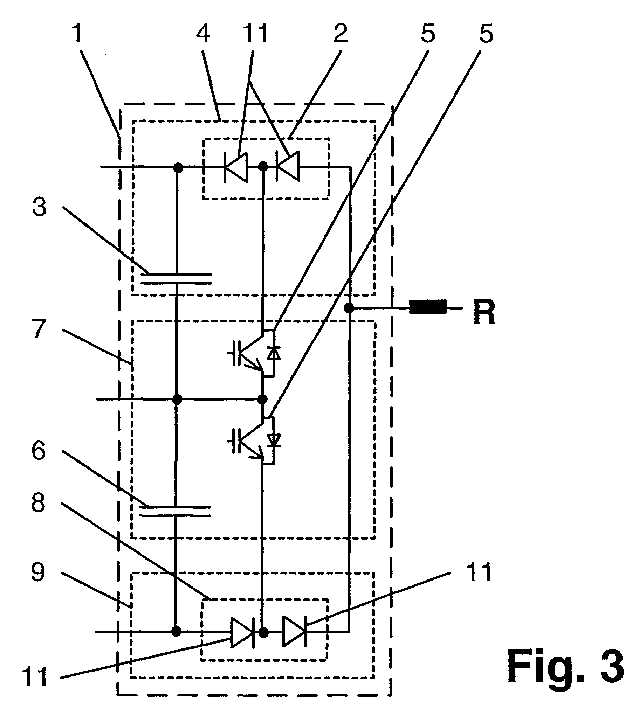

Bei den in Fig. 1 und Fig. 2 gezeigten Ausführungsformen der erfindungsgemässen Umrichterschaltung ist beim ersten Schaltgruppensystem 1 einer der ansteuerbaren Leistungshalbleiterschalter 5 einer jeden Zwischenschaltgruppe 7 mit dem Kondensator 6 derselben Zwischenschaltgruppe 7 verbunden. Desweiteren ist die der ersten Hauptschaltgruppe 4 benachbarte Zwischenschaltgruppe 7 parallel zur ersten Hauptschaltgruppe 4 geschaltet und die der zweiten Hauptschaltgruppe 9 benachbarte Zwischenschaltgruppe 7 parallel zur zweiten Hauptschaltgruppe 9 geschaltet. Im Unterschied zu den beiden Ausführungsformen der erfindungsgemässen Umrichterschaltung nach Fig. 1 und Fig. 2 ist bei einer dritten Ausführungsform der erfindungsgemässen Umrichterschaltung gemäss Fig. 3 beim ersten Schaltgruppensystem 1 der Verbindungspunkt der beiden ansteuerbaren Leistungshalbleiterschalter 5 einer jeden Zwischenschaltgruppe 7 mit dem Kondensator 6 derselben Zwischenschaltgruppe 7 verbunden, wobei die der ersten Hauptschaltgruppe 4 benachbarte Zwischenschaltgruppe 7 mit dem einen der beiden ansteuerbaren Leistungshalbleiterschalter 5 mit dem Verbindungspunkt der beiden elektronischen Bauelemente 11 der ersten Hauptschaltgruppe 4 verbunden ist. Darüber hinaus ist gemäss Fig. 3 beim ersten Schaltgruppensystem 1 die der zweiten Hauptschaltgruppe 9 benachbarte Zwischenschaltgruppe 7 mit dem anderen der beiden ansteuerbaren Leistungshalbleiterschalter 5 mit dem Verbindungspunkt der beiden elektronischen Bauelemente 11 der zweiten Hauptschaltgruppe 9 verbunden.

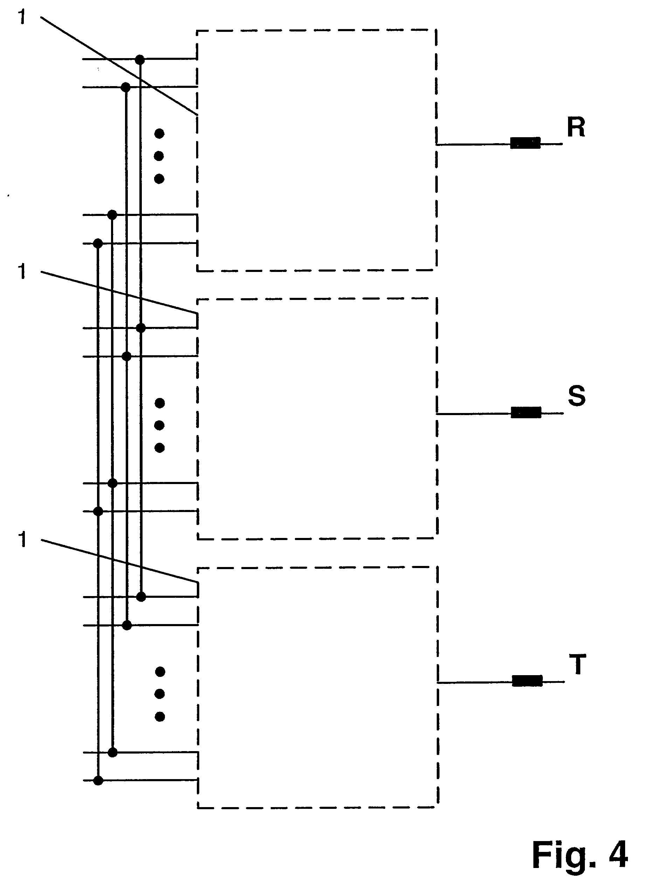

In Fig. 4 ist eine vierte Ausführungsform der erfindungsgemässen Umrichterschaltung gezeigt. Darin sind bei mehreren Phasen R, S, T, insbesondere bei den in Fig. 4 gezeigten drei Phasen R, S, T, die ersten Schaltgruppensysteme 1 der Phasen R, S, T parallel miteinander verbunden, d.h. die Kondensatoren 3 der ersten Hauptschaltgruppen 4 der ersten Schaltgruppensysteme 1 der Phasen R, S, T sind miteinander entsprechend verbunden, die zweiten Hauptschaltgruppen 9 der ersten Schaltgruppensysteme 1 sind miteinander entsprechend verbunden und die Kondensatoren 6 der Zwischenschaltgruppen 7 der ersten Schaltgruppensysteme 1 sind miteinander entsprechend verbunden.

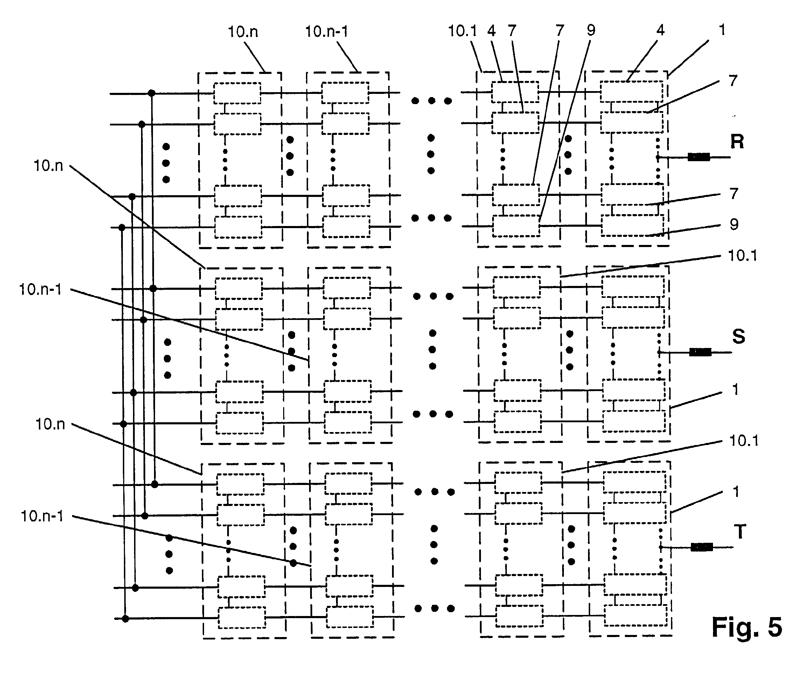

Wie vorstehend bereits erwähnt, ist bei der erfindungsgemässen Umrichterschaltung beim ersten Schaltgruppensystem 1 mindestens eine Zwischenschaltgruppe 7, d.h. eine oder mehrere Zwischenschaltgruppen 7 vorgesehen. Gemäss den Ausführungsformen nach Fig. 5, Fig. 6 und Fig. 9 der erfindungsgemässen Umrichterschaltung, welche nachfolgend detailliert erläutert werden, sind im Falle mehrerer vorgesehener Zwischenschaltgruppen 7 beim ersten Schaltgruppensystem 1 jeweils benachbarte Zwischenschaltgruppen 7 parallel miteinander verbunden, wobei die Zwischenschaltgruppen 7 gemäss der Ausführungsform nach Fig. 1 oder Fig. 2 ausgebildet sind. Es versteht sich, dass die vorstehend genannte Parallelschaltung jeweils benachbarte Zwischenschaltgruppen 7 beim ersten Schaltgruppensystem 1 auch mit den nach Fig. 3 ausgeführten Zwischenschaltgruppen 7 des ersten Schaltgruppensystems 1 möglich ist. Durch die Vielzahl an Zwischenschaltgruppen 7 beim ersten Schaltgruppensystem 1 kann die zu übertragende Leistung durch eine höhere über dem ersten Schaltgruppensystem 1 anliegende Gleichspannung erhöht werden, da sich diese Gleichspannung in einzelne Gleichspannungen entsprechend dem Kondensator 3 der zugehörigen ersten Hauptschaltgruppe 4 sowie an den Kondensatoren 6 der Vielzahl an Zwischenschaltgruppen 7 aufteilt. Darüber hinaus wird durch die Vielzahl eine Erhöhung der Anzahl an Schaltniveaus erzielt, wodurch sehr vorteilhaft eine weitere Reduzierung von Oberschwingungen auf der Phasenseite der Umrichterschaltung erreicht werden kann.

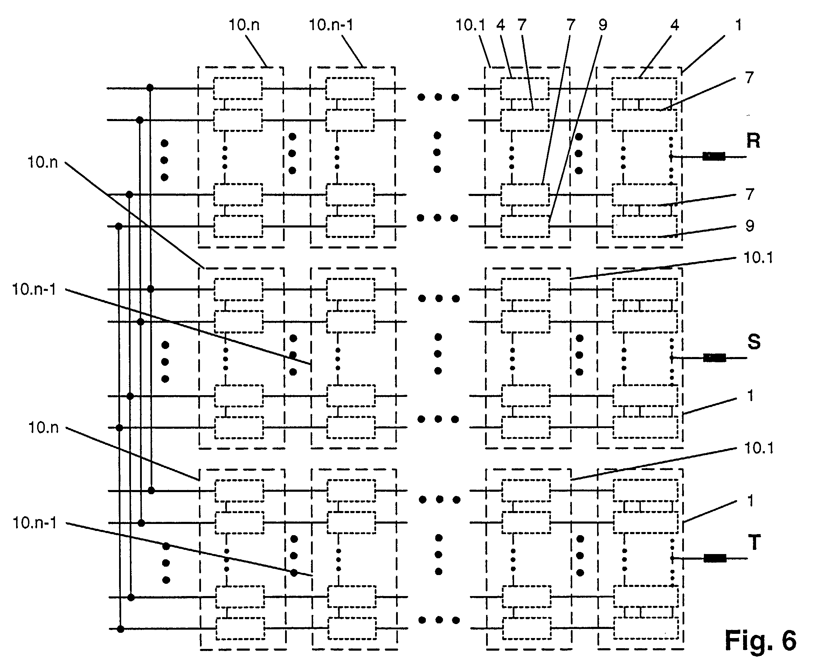

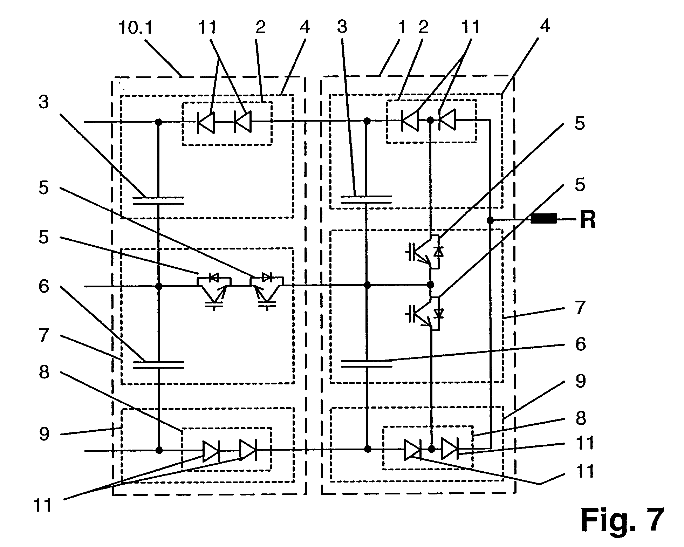

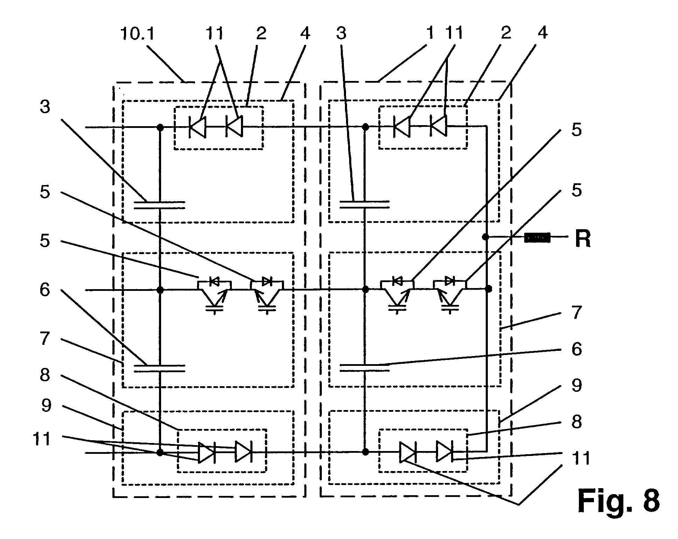

In Fig. 5 ist eine fünfte Ausführungsform der erfindungsgemässen Umrichterschaltung gezeigt, wobei darin die ersten Schaltgruppensysteme 1 der Phasen R, S, T mit den entsprechenden ersten und zweiten Hauptschaltgruppen 4, 9 und mehreren Zwischenschaltgruppen 7 nach Fig. 1 oder Fig. 2 ausgebildet sind. Weiterhin ist in Fig. 6 eine sechste Ausführungsform der erfindungsgemässen Umrichterschaltung gezeigt, wobei darin die ersten Schaltgruppensysteme 1 der Phasen R, S, T mit den entsprechenden ersten und zweiten Hauptschaltgruppen 4, 9 und mehreren Zwischenschaltgruppen 7 nach Fig. 3 ausgebildet sind. Beispielhaft sind bei der fünften Ausführungsform nach Fig. 5 und bei der sechsten Ausführungsform nach Fig. 6 drei Phasen gezeigt, wobei allgemein eine beliebige Anzahl an Phasen R, S, T denkbar ist. Gemäss Fig. 5 und Fig. 6 sind für jede Phase R, S, T n weitere Schaltgruppensysteme 10.1,...10.n vorgesehen, wobei n ≥ 1 ist und bei jedem der n weiteren Schaltgruppensysteme 10.1,...10.n einer der ansteuerbaren Leistungshalbleiterschalter 5 einer jeden Zwischenschaltgruppe 7 mit dem Kondensator 6 derselben Zwischenschaltgruppe 7 verbunden ist und die der ersten Hauptschaltgruppe 4 benachbarte Zwischenschaltgruppe 7 in Serie zur ersten Hauptschaltgruppe 4 geschaltet ist und die der zweiten Hauptschaltgruppe 9 benachbarte Zwischenschaltgruppe 7 in Serie zur zweiten Hauptschaltgruppe 9 geschaltet ist. Weiterhin sind gemäss Fig. 5 und Fig. 6 die erste Hauptschaltgruppe 4 des ersten Schaltgruppensystems 1 und die ersten Hauptschaltgruppen 4 der n weiteren Schaltgruppensysteme 10.1,...10.n zueinander in Serie geschaltet und die zweite Hauptschaltgruppe 9 des ersten Schaltgruppensystems 1 und die zweiten Hauptschaltgruppen 9 der n weiteren Schaltgruppensysteme 10.1,...10.n zueinander in Serie geschaltet. Jedes der n weiteren Schaltgruppensysteme 10.1,...10.n der Phasen R, S, T ist bezüglich der erste und zweite Hauptschaltgruppe 4, 9 und der oder den Zwischenschaltgruppen 7 vorzugsweise gemäss dem vorstehend beschriebenen ersten Schaltgruppensystem 1 nach Fig. 1 oder Fig. 2 ausgebildet. In ähnlicher Weise wie nach Fig. 4, sind bei der fünften und sechsten Ausführungsform der erfindungsgemässen Umrichterschaltung gemäss Fig. 5 und Fig. 6 bei mehreren Phasen R, S, T die n-ten weiteren Schaltgruppensysteme 10.n der Phasen R, S, T parallel miteinander verbunden, d.h. die Kondensatoren 3 der ersten Hauptschaltgruppen 4 der n-ten weiteren Schaltgruppensysteme 10.n sind miteinander entsprechend verbunden, die zweiten Hauptschaltgruppen 9 der n-ten weiteren Schaltgruppensysteme 10.n sind miteinander entsprechend verbunden und die Kondensatoren 6 der Zwischenschaltgruppen 7 der n-ten weiteren Schaltgruppensysteme 10.n sind miteinander entsprechend verbunden. Durch die vorgesehenen n weiteren Schaltgruppensysteme 10.1,...10.n für jede Phase R, S, T halbieren sich die Gleichspannungen der Kondensatoren 3, 6 des jeweiligen n-ten Schaltgruppensystems 10.n an den Kondensatoren 3, 6 des nachgeschalteten (n-1)-ten Schaltgruppensystems 10.n-1 im Betrieb der erfindungsgemässe Umrichterschaltung vorteilhaft. Bei n=1 weiteren Schaltgruppensystemen 10.1,...10.n, wie dies beispielhaft in einer siebten, insbesondere einphasigen, Ausführungsform der Umrichterschaltung gemäss Fig. 7 und in einer achten, insbesondere ebenfalls einphasigen, Ausführungsform der Umrichterschaltung gemäss Fig. 8 gezeigt ist, liegt demnach im Betrieb der Umrichterschaltung am Kondensator 3 der ersten Hauptschaltgruppe 4 des ersten Schaltgruppensystems 1 und am Kondensator 6 der Zwischenschaltgruppe 7 des ersten Schaltgruppensystems 1 jeweils die halbe Gleichspannung des Kondensators 3 der ersten Hauptschaltgruppe 4 des ersten weiteren Schaltgruppensystems 10.1 beziehungsweise des Kondensators 6 der Zwischenschaltgruppe 7 des ersten weiteren Schaltgruppensystems 10.1 an. Durch diese Halbierung der Gleichspannung werden die Leistungshalbleiterschalter 2, 5, 8 und die Kondensatoren 3, 6 des ersten Schaltgruppensystems 1 vorteilhaft entlastet. Allgemein kann dadurch eine Vielzahl an Schaltniveaus generiert werden, wodurch sehr vorteilhaft eine effektive Reduzierung von Oberschwingungen auf der Phasenseite erreicht werden kann. Gemäss Fig. 7 entspricht das erste Schaltgruppensystem 1 dem vorstehend detailliert beschriebenen Schaltgruppensystem 1 gemäss Fig. 3. Ferner entspricht das erste weitere Schaltgruppensystem 10.1 nach Fig. 7 dem vorstehend detailliert beschriebenen Schaltgruppensystem 1 gemäss Fig. 2, wobei es selbstverständlich auch denkbar ist, dass das erste weitere Schaltgruppensystem 10.1 nach Fig. 7 wie das vorstehend detailliert beschriebene Schaltgruppensystem 1 gemäss Fig. 1 ausgebildet ist. Gemäss Fig. 8 entspricht das erste Schaltgruppensystem 1 und das erste weitere Schaltgruppensystem 10.1 dem vorstehend detailliert beschriebenen Schaltgruppensystem 1 gemäss Fig. 2, wobei es selbstverständlich auch denkbar ist, dass das erste Schaltgruppensystem 1 und das erste weitere Schaltgruppensystem 10.1 nach Fig. 7 wie das vorstehend detailliert beschriebene Schaltgruppensystem 1 gemäss Fig. 1 ausgebildet ist.

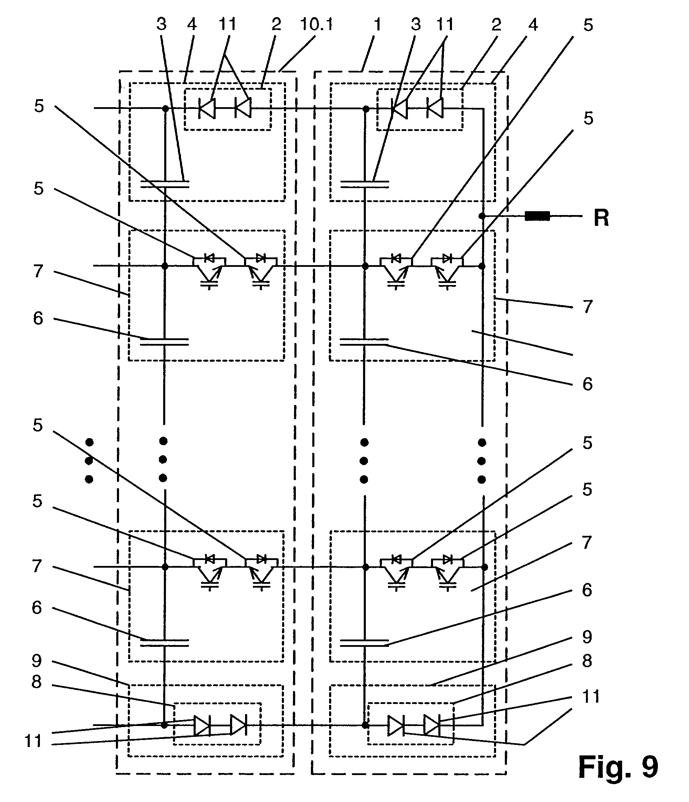

Gemäss der fünften und sechsten Ausführungsform der erfindungsgemässen Umrichterschaltung nach Fig. 5 und 6 entspricht die Anzahl der Zwischenschaltgruppen 7 eines jeden Schaltgruppensystems 10.1,...10.n der n weiteren Schaltgruppensysteme 10.1,...10.n der Anzahl der Zwischenschaltgruppen 7 des ersten Schaltgruppensystems 1, wobei bei jedem der n weiteren Schaltgruppensysteme 10.1,...10.n im Falle mehrerer vorgesehener Zwischenschaltgruppen 7 jeweils benachbarte Zwischenschaltgruppen 7 seriell miteinander verbunden sind. Weiterhin ist gemäss Fig. 5 und 6 und nach einer neunten Ausführungsform der erfindungsgemässen Umrichterschaltung gemäss Fig. 9 jede Zwischenschaltgruppe 7 des ersten weiteren Schaltgruppensystems 10.1 seriell mit jeweils einer Zwischenschaltgruppe 7 des ersten Schaltgruppensystems 1 verbunden. Beispielhaft ist bei der neunten Ausführungsform der erfindungsgemässen Umrichterschaltung gemäss Fig. 9 n=1, wobei die Umrichterschaltung insbesondere einphasig ausgebildet ist. Gemäss Fig. 9 entspricht das erste Schaltgruppensystem 1 und das erste weitere Schaltgruppensystem 10.1 dem vorstehend detailliert beschriebenen Schaltgruppensystem 1 gemäss Fig. 2 mit mehreren Zwischenschaltgruppen 7, wobei es selbstverständlich auch denkbar ist, dass das erste Schaltgruppensystem 1 und das erste weitere Schaltgruppensystem 10.1 nach Fig. 9 wie das vorstehend detailliert beschriebene Schaltgruppensystem 1 gemäss Fig. 1 mit mehreren Zwischenschaltgruppen 7 ausgebildet ist. Darüber hinaus ist es auch möglich, dass erste Schaltgruppensystem 1 nach Fig. 9 wie das vorstehend detailliert beschriebene Schaltgruppensystem 1 gemäss Fig. 3 mit mehreren Zwischenschaltgruppen 7 ausgebildet ist und das erste weitere Schaltgruppensystem 10.1 nach Fig. 9 wie das vorstehend detailliert beschriebene Schaltgruppensystem 1 gemäss Fig. 1 mit mehreren Zwischenschaltgruppen 7 ausgebildet ist.

Für n ≥ 2, was der fünften und sechsten Ausführungsform der Umrichterschaltung gemäss Fig. 5 und Fig. 6 entspricht, ist jede Zwischenschaltgruppe 7 des n-ten weiteren Schaltgruppensystems 10.2,...10.n seriell mit jeweils einer Zwischenschaltgruppe 7 des (n-1)-ten Schaltgruppensystems 10.2,...10.n verbunden. Der Vorteil, dass allgemein die Anzahl der Zwischenschaltgruppen 7 eines jeden Schaltgruppensystems 10.1,...10.n der n weiteren Schaltgruppensysteme 10.1,...10.n der Anzahl der Zwischenschaltgruppen 7 des ersten Schaltgruppensystems 1 entspricht, liegt darin, dass ein symmetrischer und zudem modularer Aufbau der Umrichterschaltung erreicht werden kann, so dass die Umrichterschaltung einfach und schnell adaptierbar ist und somit an verschiedenste Schaltungsanforderungen angepasst werden kann. Weiterhin kann durch die in Fig. 5, Fig. 6 und Fig. 9 gezeigte Vielzahl an Zwischenschaltgruppen 7 für jedes Schaltgruppensystem 1, 10.1,...10.n die zu übertragende Leistung durch eine höhere über dem jeweiligen n-ten Schaltgruppensysteme 10.n anliegende Gleichspannung erhöht werden, da sich diese Gleichspannung in einzelne Gleichspannungen entsprechend dem Kondensator 3 der zugehörigen ersten Hauptschaltgruppe 4 sowie an den Kondensatoren 6 der Vielzahl an Zwischenschaltgruppen 7 aufteilt. Darüber hinaus wird durch die Vielzahl eine Erhöhung der Anzahl an Schaltniveaus erzielt, wodurch sehr vorteilhaft eine weitere Reduzierung von Oberschwingungen auf der Phasenseite der Umrichterschaltung erreicht werden kann.

Bereits erläutert wurde, dass die ansteuerbaren Leistungshalbleiterschalter 5 der Zwischenschaltgruppe 7 gemäss den Ausführungsformen der Umrichterschaltung nach Fig. 1 bis Fig. 9 als Bipolartransistoren mit isoliert angeordneten Ansteuerelektroden und antiparallel geschalteten Dioden ausgebildet sind. Mittels dieser Bipolartransistoren ist es vorteilhaft möglich, durch entsprechende Ansteuerung der Bipolartransistoren, d.h. beim Einschalten der Bipolartransistoren, den Stromgradient di/dt der Diode ersten beziehungsweise der zweiten Hauptschaltgruppe 4, 9 gemäss Fig. 1 beziehungsweise der Dioden der ersten beziehungsweise der zweiten Hauptschaltgruppe 4, 9 gemäss Fig. 2, Fig. 3, Fig. 7, Fig. 8 und Fig. 9 kontrolliert zu begrenzen und somit vorteilhaft die jeweilige Diode vor einer Beschädigung oder gar Zerstörung zu schützen.

Insgesamt stellt die erfindungsgemässe Umrichterschaltung eine durch wenig Bauelemente gekennzeichnete und damit unkomplizierte, robuste und wenig störungsanfällige Lösung dar, wobei gleichzeitig eine Übertragung grosser Leistungen möglich ist

### Bezugszeichenliste

- 1: erstes Schaltgruppensystem
- 2: Leistungshalbleiterschalter der ersten Hauptschaltgruppe
- 3: Kondensator der ersten Hauptschaltgruppe
- 4: erste Hauptschaltgruppe
- 5: ansteuerbarer Leistungshalbleiterschalter der Zwischenschaltgruppe
- 6: Kondensator der Zwischenschaltgruppe
- 7: Zwischenschaltgruppe
- 8: Leistungshalbleiterschalter der zweiten Hauptschaltgruppe
- 9: zweite Hauptschaltgruppe
- 10.1,...10.n: weitere Schaltgruppensysteme
- 11: passives nicht ansteuerbares elektronisches Bauelement

## Patentansprüche

1. Umrichterschaltung für mindestens eine Phase (R, S, T), mit einem für jede Phase (R, S, T) vorgesehenen ersten Schaltgruppensystem (1),
welches eine durch einen Leistungshalbleiterschalter (2) und durch einen mit dem Leistungshalbleiterschalter (2) verbundenen Kondensator (3) gebildete erste Hauptschaltgruppe (4) aufweist,
welches mindestens eine durch zwei in Serie geschaltete ansteuerbare Leistungshalbleiterschalter (5) und durch einen Kondensator (6) gebildete Zwischenschaltgruppe (7) aufweist, wobei die oder eine Zwischenschaltgruppe (7) mit der ersten Hauptschaltgruppe (4) verbunden ist,
und welches eine durch einen Leistungshalbleiterschalter (8) gebildete zweite Hauptschaltgruppe (9) aufweist, wobei die oder eine Zwischenschaltgruppe (7) mit der zweiten Hauptschaltgruppe (9) verbunden ist,
**dadurch gekennzeichnet,**
**dass** der Leistungshalbleiterschalter (2) der ersten Hauptschaltgruppe (4) durch ein passives nicht ansteuerbares elektronisches Bauelement (11) mit unidirektionaler Stromführungsrichtung gebildet ist, und
**dass** der Leistungshalbleiterschalter (8) der zweiten Hauptschaltgruppe (9) durch ein passives nicht ansteuerbares elektronisches Bauelement (11) mit unidirektionaler Stromführungsrichtung gebildet ist.

2. Umrichterschaltung nach Anspruch 1, **dadurch gekennzeichnet, dass** beim ersten Schaltgruppensystem (1) der Leistungshalbleiterschalter (2) der ersten Hauptschaltgruppe (4) durch ein weiteres passives nicht ansteuerbares elektronisches Bauelement (11) mit unidirektionaler Stromführungsrichtung gebildet ist, wobei das weitere elektronische Bauelement (11) in Serie zum bestehenden elektronischen Bauelement (11) geschaltet ist, und
dass beim ersten Schaltgruppensystem (1) der Leistungshalbleiterschalter (8) der zweiten Hauptschaltgruppe (9) durch ein weiteres passives nicht ansteuerbares elektronisches Bauelement (11) mit unidirektionaler Stromführungsrichtung gebildet ist, wobei das weitere elektronische Bauelement (11) in Serie zum bestehenden elektronischen Bauelement (11) geschaltet ist.

3. Umrichterschaltung nach Anspruch 1 oder 2, **dadurch gekennzeichnet, dass** das elektronische Bauelement (11) eine Diode ist.

4. Umrichterschaltung nach einem der Ansprüche 1 bis 3, **dadurch gekennzeichnet, dass** beim ersten Schaltgruppensystem (1) einer der ansteuerbaren Leistungshalbleiterschalter (5) einer jeden Zwischenschaltgruppe (7) mit dem Kondensator (6) derselben Zwischenschaltgruppe (7) verbunden ist,
dass beim ersten Schaltgruppensystem (1) die der ersten Hauptschaltgruppe (4) benachbarte Zwischenschaltgruppe (7) parallel zur ersten Hauptschaltgruppe (4) geschaltet ist, und
dass beim ersten Schaltgruppensystem (1) die der zweiten Hauptschaltgruppe (9) benachbarte Zwischenschaltgruppe (7) parallel zur zweiten Hauptschaltgruppe (9) geschaltet ist.

5. Umrichterschaltung nach einem der Ansprüche 2 oder 3, **dadurch gekennzeichnet, dass** beim ersten Schaltgruppensystem (1) der Verbindungspunkt der beiden ansteuerbaren Leistungshalbleiterschalter (5) einer jeden Zwischenschaltgruppe (7) mit dem Kondensator (6) derselben Zwischenschaltgruppe (7) verbunden ist,
dass beim ersten Schaltgruppensystem (1) die der ersten Hauptschaltgruppe (4) benachbarte Zwischenschaltgruppe (7) mit dem einen der beiden ansteuerbaren Leistungshalbleiterschalter (5) mit dem Verbindungspunkt der beiden elektronischen Bauelemente (11) der ersten Hauptschaltgruppe (4) verbunden ist, und
dass beim ersten Schaltgruppensystem (1) die der zweiten Hauptschaltgruppe (9) benachbarte Zwischenschaltgruppe (7) mit dem anderen der beiden ansteuerbaren Leistungshalbleiterschalter (5) mit dem Verbindungspunkt der beiden elektronischen Bauelemente (11) der zweiten Hauptschaltgruppe (9) verbunden ist.

6. Umrichterschaltung nach einem der Ansprüche 1 bis 5, **dadurch gekennzeichnet, dass** beim ersten Schaltgruppensystem (1) im Falle mehrerer vorgesehener Zwischenschaltgruppen (7) jeweils benachbarte Zwischenschaltgruppen (7) parallel miteinander verbunden sind.

7. Umrichterschaltung nach einem der Ansprüche 1 bis 6, **dadurch gekennzeichnet, dass** bei mehreren Phasen (R, S, T) die ersten Schaltgruppensysteme (1) der Phasen (R, S, T) parallel miteinander verbunden sind.

8. Umrichterschaltung nach einem der Ansprüche 4 oder 5, **dadurch gekennzeichnet, dass** für jede Phase (R, S, T) n weitere Schaltgruppensysteme (10.1,...10.n) vorgesehen sind, wobei n ≥ 1 ist und bei jedem der n weiteren Schaltgruppensysteme (10.1,...10.n) einer der ansteuerbaren Leistungshalbleiterschalter (5) einer jeden Zwischenschaltgruppe (7) mit dem Kondensator (6) derselben Zwischenschaltgruppe (7) verbunden ist und die der ersten Hauptschaltgruppe (4) benachbarte Zwischenschaltgruppe (7) in Serie zur ersten Hauptschaltgruppe (4) geschaltet ist und die der zweiten Hauptschaltgruppe (9) benachbarte Zwischenschaltgruppe (7) in Serie zur zweiten Hauptschaltgruppe (9) geschaltet ist,
dass die erste Hauptschaltgruppe (4) des ersten Schaltgruppensystems (1) und die ersten Hauptschaltgruppen (4) der n weiteren Schaltgruppensysteme (10.1,...10.n) zueinander in Serie geschaltet sind, und
dass die zweite Hauptschaltgruppe (9) des ersten Schaltgruppensystems (1) und die zweiten Hauptschaltgruppen (9) der n weiteren Schaltgruppensysteme (10.1,...10.n) zueinander in Serie geschaltet sind.

9. Umrichterschaltung nach Anspruch 8, **dadurch gekennzeichnet, dass** bei mehreren Phasen (R, S, T) die n-ten weiteren Schaltgruppensysteme (10.n) der Phasen (R, S, T) parallel miteinander verbunden sind.

10. Umrichterschaltung nach Anspruch 8 oder 9, **dadurch gekennzeichnet, dass** die Anzahl der Zwischenschaltgruppen (7) eines jeden Schaltgruppensystems (10.1 ,...10.n) der n weiteren Schaltgruppensysteme (10.1,...10.n) der Anzahl der Zwischenschaltgruppen (7) des ersten Schaltgruppensystems (1) entspricht, und dass bei jedem der n weiteren Schaltgruppensysteme (10.1,...10.n) im Falle mehrerer vorgesehener Zwischenschaltgruppen (7) jeweils benachbarte Zwischenschaltgruppen (7) seriell miteinander verbunden sind.

11. Umrichterschaltung nach Anspruch 10, **dadurch gekennzeichnet, dass** jede Zwischenschaltgruppe (7) des ersten weiteren Schaltgruppensystems (10.1) seriell mit jeweils einer Zwischenschaltgruppe (7) des ersten Schaltgruppensystems (1) verbunden ist.

12. Umrichterschaltung nach Anspruch 11, **dadurch gekennzeichnet, dass** für n ≥ 2 jede Zwischenschaltgruppe (7) des n-ten weiteren Schaltgruppensystems (10.2,...10.n) seriell mit jeweils einer Zwischenschaltgruppe (7) des (n-1)-ten Schaltgruppensystems (10.2,...10.n) verbunden ist.
